# EUROPÄISCHE PATENTSCHRIFT

(11) **EP 2 673 147 B1**
(45) Veröffentlichungstag und Bekanntmachung des Hinweises auf die Patenterteilung: **21.01.2015**
(21) Anmeldenummer: 11788882.6
(22) Anmeldetag: 01.12.2011
(51) Int. Cl.: B60C 23/04, B60C 19/12

(54) **FAHRZEUG-LUFTREIFEN MIT EINER DICHTMASSE AUF DER REIFEN-INNENSEITE**
VEHICLE PNEUMATIC TYRE HAVING A SEALING MATERIAL ON THE INSIDE OF THE TYRE
PNEU POUR VÉHICULE, PRÉSENTANT UN MATÉRIAU D'ÉTANCHÉITÉ SUR LA FACE INTÉRIEURE DU PNEU

(30) Priorität: 07.02.2011 DE 102011003712
(43) Veröffentlichungstag der Anmeldung: 18.12.2013
(73) Patentinhaber: Bayerische Motoren Werke Aktiengesellschaft, 80809 München (DE)
(72) Erfinder: SCHWAB, Axel, 80538 München (DE); PEHLKE, Martin, 82140 Olching (DE); GUMPP, Armin, 86368 Gersthofen (DE)
(86) Internationale Anmeldenummer: PCT/EP2011/071558
(87) Internationale Veröffentlichungsnummer: WO 2012/107124

(56) Entgegenhaltungen:
- EP-A2- 1 598 220
- WO-A1-99/29522
- DE-A1-102008 053 506

## Beschreibung

Die Erfindung betrifft einen Fahrzeug-Luftreifen mit einer Dichtmasse auf der ReifenInnenseite, die bei einer Beschädigung des Reifens eine hieraus resultierende Undichtigkeit zumindest annähernd verschließt, sowie mit einem Warnsystem. Zum Stand der Technik wird neben den deutschen Offenlegungsschriften DE 10 2007 030 238 A1, DE 10 2007 008 043 A1 und DE 10 2009 006 707 A1 auf die DE 10 2008 053 506 A1 verwiesen.

In der zweitgenannten Schrift sind sog. Elektronikmodule genannt, die Transponder aufweisen und Sensoren, mit denen vorrangig der Luftdruck im Reifen gemessen und an eine im Fahrzeug vorgesehene Überwachungseinheit übermittelt wird. Solche Reifenmodule, die vorliegend als Sensoreinheiten bezeichnet sind, sind dem Fachmann bekannt. Grundsätzlich bekannt sind in der Wand des Reifens integrierte Sensoreinheiten, ferner Sensoreinheiten, an die ein sog. Fuß aus einem GummiMaterial angeformt ist, der an die Wand des Reifens angeklebt wird (DE 10 2007 030 238 A1) sowie Sensoreinheiten, die in eine geeignete Haltevorrichtung eingesetzt sind, die an die Innenseite des Reifens, insbesondere an die Innenseite von dessen Lauffläche anvulkanisiert oder angeklebt ist (DE 10 2009 006 707 A1).

In der eingangs letztgenannten Schrift ist ein sog. Self-Sealing-Reifen mit einem Warnsystem beschrieben. Self-Sealing-Reifen zeichnen sich durch eine zumindest auf die Innenseite der Reifen-Lauffläche aufgebrachte Dichtmasse aus, die beispielsweise bei einem Durchstich der Laufläche durch einen ungünstig auf der Fahrbahn liegenden Nagel oder dgl. das hierbei entstehende Loch im wesentlichen dicht verschließt. Der Reifen nach dieser DE 10 2008 053 506 A1 weist ferner ein Warnsystem auf, das bei einer Beschädigung des Reifens eine Warnmeldung auslöst und das durch ein Netz von elektrischen Leitungen gebildet ist, die die Dichtmasse überdecken.

Anstelle eines solchen aufwändigen Warnsystems könnte man in einem Reifen mit einer Dichtmasse auf der Reifen-Innenseite, die bei einer Beschädigung des Reifens eine hieraus resultierende Undichtigkeit zumindest annähernd verschließt, auch eine grundsätzlich bekannte Reifendruck-Sensoreinheit im Reifen anordnen, jedoch hat sich gezeigt, dass das als bevorzugte Verbindungstechnik gängige Verkleben einer solchen kompakten Sensoreinheit bzw. von deren Haltevorrichtung auf der mit einer solchen Dichtmasse beschichteten Reifen-Innenwand bzw. Laufflächen-Innenseite nicht möglich ist, da schlichtweg kein Klebstoff gefunden werden konnte, der eine ausreichende Haftung an einer solchen Dichtmasse gewährleistet.

Wie dennoch eine übliche Sensoreinheit zur Überwachung des Reifen-Luftdrucks an einem Fahrzeug-Luftreifen nach dem Oberbegriff des Anspruchs 1 mit einer Dichtmasse an der Reifeninnenseite montiert werden kann, soll hiermit aufgezeigt werden (= Aufgabe der vorliegenden Erfindung).

Die Lösung dieser Aufgabe ist dadurch gekennzeichnet, dass das als an sich bekannte Sensoreinheit zur Überwachung des Luftdrucks im Reifen ausgebildete Warnsystem mittels einer Fixierfolie an der mit der Dichtmasse versehenen ReifenInnenseite fixiert ist, wobei die Fixierfolie großflächig auf die Reifen-Innenseite aufgeklebt ist und die Oberfläche der Fixierfolie um ein Vielfaches größer ist als die Grundfläche der Sensoreinheit oder einer Haltevorrichtung für die Sensoreinheit. Vorteilhafte Aus- und Weiterbildungen sind Inhalt der Unteransprüche.

Es hat sich gezeigt, dass eine signifikante Vergrößerung der in eine Klebeverbindung einbezogenen Oberfläche der Dichtmasse bereits eine ausreichende Maßnahme darstellt, um eine Sensoreinheit zur Überwachung des Luftdrucks im Reifen sicher an einer mit dieser Dichtmasse versehenen oder beschichteten Reifen-Innenseite oder Innenwand durch Kleben befestigen zu können. Diese Oberflächenvergrößerung wird ohne nennenswerten Nachteil im Hinblick auf Gewicht und insbesondere Unwucht mit einer sog. Fixierfolie erzielt, über welche die Reifendruck-Sensoreinheit direkt oder über eine Haltevorrichtung indirekt an der Reifen-Innenseite befestigt werden kann. Dabei kann die Fixierfolie die Sensoreinheit überdecken, so dass sich die Sensoreinheit zwischen der Fixierfolie und der Reifen-Innenseite befindet, wobei zusätzlich zwischen der Sensoreinheit und der Reifen-Innenwand noch weiterer Klebstoff vorgesehen sein kann. Um bei Verwendung einer im wesentlichen luftdichten Fixierfolie dann weiterhin das fehlerfreie Messen des Reifen-Luftdrucks zu ermöglichen, kann es erforderlich sein, in der Fixierfolie an geeigneter Stelle zumindest ein Loch oder einen Kanal für einen Druckausgleich zwischen der Sensoreinheit und dem Reifen-Innenraum vorzusehen. Es ist aber auch möglich, die Sensoreinheit auf der der Reifen-Innenwand abgewandten Seite der Fixierfolie zu befestigen bspw. anzukleben und/oder auf der der Reifen-Innenwand abgewandten Seite der Fixierfolie eine an die Sensoreinheit angepasste Haltevorrichtung vorzusehen, wobei diese Haltevorrichtung in die Fixierfolie eingeformt sein kann und somit quasi durch die Fixierfolie selbst gebildet ist, oder es kann eine solche der Sensoreinheit zugeordnete Haltevorrichtung mit der Fixierfolie durch Kleben verbunden sein.

Wie bereits erwähnt kann mittels einer erfindungsgemäßen Fixierfolie die in die Klebeverbindung einbezogene Oberfläche der Dichtmasse erheblich vergrößert werden, was in anderen Worten ausgedrückt bedeutet, dass die Oberfläche der Fixierfolie um ein Vielfaches, vorzugsweise um einen Faktor in der Größenordnung von zumindest 10 bis 20 größer ist als die der Reifen-Innenseite zugewandte Grundfläche der besagten Sensoreinheit oder der Haltevorrichtung für die Sensoreinheit. Für die Definition dieses Größenverhältnisses soll als Haltevorrichtung nur ein für diese Halte-Funktion vorgesehenes Bauelement oder, falls die Haltevorrichtung in die Fixierfolie eingeformt ist, nur der dieser Halte-Funktion dienende Abschnitt der Fixierfolie gelten. Dabei ist mit dem Begriff "Grundfläche" diejenige Fläche gemeint, mit der die Sensoreinheit oder die Haltevorrichtung im Stand der Technik ohne eine erfindungsgemäße Fixierfolie an der Reifen-Innenseite festgeklebt wäre. In einer bevorzugten Ausführungsform ist die in Umfangsrichtung des Fahrzeug-Reifens gemessene Länge der Fixierfolie größer ist als die Breite dieses Fahrzeug-Reifens, wobei Fixierfolie selbstverständlich auch noch größer sein kann als zahlenmäßig angegeben ist; im Extremfall kann sich die Fixierfolie über den gesamten Umfang der Reifen-Innenseite, insbesondere über die Innenseite der Reifen-Lauffläche erstrecken. Insbesondere in letztgenannten Fall ist es vorteilhaft, wenn die Fixierfolie eine im wesentlichen diffusionsdichte Barriereschicht aufweist, die einen schleichenden Druckverlust im Reifen verhindert, so wie dies beispielsweise aus der DE 10 2004 020 076 A1 bekannt ist.

Im Sinne vorteilhafter Weiterbildungen der vorliegenden Erfindung kann die hier sog. Fixierfolie zumindest eine weitere Funktion neben dem Fixieren der Reifendruck-Sensoreinheit auf der mit der Dichtmasse versehenen Reifen-Innenseite übernehmen. So kann neben dieser Sensoreinheit eine weitere vorzugsweise der Überwachung des Reifens dienende Einheit oder eine aus der Bewegung des Reifens Daten oder elektrische Energie gewinnende Einheit auf der Fixierfolie vorgesehen oder durch die Fixierfolie an der Reifen-Innenseite gehalten sein. Als Beispiele für der Überwachung des Reifens dienende Einheiten können Feuchtigkeitssensoren, Temperatursensoren oder ein Durchstich-Sensor genannt werden, wobei ein Reifen-Durchstich beispielsweise auch mittels eines Feuchtigkeitssensors festgestellt werden kann. Als Strukturen zur Energieerzeugung können beispielsweise Piezoelemente genannt werden, die aus Verformungen oder Vibrationen elektrische Energie gewinnen oder andere Elemente, die Wärmedifferenzen ausnutzen. Solche Elemente können auch in Form einer Schicht auf einer Fixierfolie vorgesehen sein. Der Gewinnung von Daten beispielsweise über die Reifenaufstandskräfte können Dehnmessstreifen dienen. Schließlich kann in die Fixierfolie auch eine Antenne zur telemetrischen Signalübertragung an eine im Fahrzeug-Aufbau vorgesehene elektronische Überwachungseinheit integriert sein oder es kann die Fixierfolie eine solche Antenne tragen. Insbesondere falls wie genannt mehrere elektrische Elemente im Reifen bzw. auf der Fixierfolie vorgesehen sind, die elektrisch miteinander verbunden sind, so kann eine solche elektrische Verbindung bspw. zwischen der Sensoreinheit oder einer für diese vorgesehene elektrische Kontaktstelle und einer weiteren Einheit bzw. einem weiteren Element vorgesehen sein. In diesem Fall kann die Fixierfolie bspw. aus einer mit Klebstoff zur Verbindung mit der Dichtmasse beschichteten flexiblen Leiterbahnfolie, bspw. einer kupferbeschichteten Polyimidfolie, bestehen.

Die heute verwendeten Reifendruck-Sensoreinheiten sind in starren Gehäusen integriert oder in einer harten Vergussmasse eingegossen, was unter extremen Randbedingungen jedoch dazu führen kann, dass die Reifeninnenfläche bei starker Reifenbelastung Schaden nimmt oder dass bei einer Hindernisüberfahrt die in der Sensoreinheit vorgesehenen Bauelemente geschädigt werden. Ein solche Auswirkung kann vermieden werden, wenn die Sensoreinheit in einer gelartigen Masse quasi schwimmend gelagert ist, was grundsätzlich bereits bekannt ist, vgl. bspw. WO2005/002887 A2. Vorliegend kann nun die erfindungsgemäße Fixierfolie ausgeführt sein, eine solche gelartige Masse aufzunehmen. Die Fixierfolie oder eine weitere an dieser befestigte folienartige Struktur bildet somit ein Behältnis für dieses elektrisch nicht leitfähige Gel, in welchem die elektrisch-elektronischen Bestandteile der Sensoreinheit gelagert sind, wobei in Abhängigkeit von den Eigenschaften des Gels und/oder von der Ausgestaltung des Drucksensors der Sensoreinheit eine gegenüber einem Austritt von Gel abgedichtete Verbindung zwischen dem Drucksensor der Sensoreinheit und dem Reifen-Innenraum vorgesehen sein kann oder sollte, um eine Druckmessung zu ermöglichen. Vorteilhafterweise sind durch eine solche Lagerung in einem elektrisch nicht leitfähigem Gel die Bauelemente der Sensoreinheit vor einer Einwirkung von Feuchtigkeit geschützt.

Im folgenden wird die Erfindung anhand dreier lediglich prinzipiell dargestellter Ausführungsbeispiele weiter erläutert, wobei die **Figuren 1****,** **2** jeweils einen TeilQuerschnitt eines erfindungsgemäßen Fahrzeug-Reifens mit einer Sensoreinheit und einer Fixierfolie hierfür zeigen, während in **Figur 3** ein entsprechender Schnitt im wesentlichen nur durch die Reifen-Lauffläche mit der darauf angeklebten Fixierfolie und dem darin eingeschlossenem Gel zur schwimmenden Lagerung der Sensoreinheit dargestellt ist.

In den Figuren sind gleiche Elemente mit den gleichen Bezugsziffern gekennzeichnet. So trägt ein Fahrzeug-Reifen die Bezugsziffer 1. Auf die Reifen-Innenseite ist zumindest im Bereich der Lauffläche 1 a des Reifens 1 eine Dichtmasse 2 aufgebracht, die bei einer Beschädigung der Reifen-Lauffläche 1 a in Form eines Durchstichs oder eines kleineren Risses die hieraus resultierende Undichtigkeit zumindest annähernd über einen gewissen Zeitraum verschließt. Innerhalb des Reifens 1, der wie üblich mit seinen beiden Wülsten auf einer nicht dargestellten Felge aufgezogen ist, ist eine Sensoreinheit 3 angeordnet, die vorzugsweise den Luftdruck im Reifen 1 ermittelt und über eine figürlich nicht gezeigte Antenne telemetrisch an eine im Aufbau des nicht dargestellten Fahrzeugs, an dem dieser Reifen 1 montiert ist, vorgesehene elektronische Überwachungseinheit übermittelt. Die Sensoreinheit 3 besteht dabei aus einem Gehäuse oder dergleichen, innerhalb dessen sich die einzelnen elektrischen und/oder elektronischen Komponenten und/oder Sensoren dieser Sensoreinheit 3 befinden.

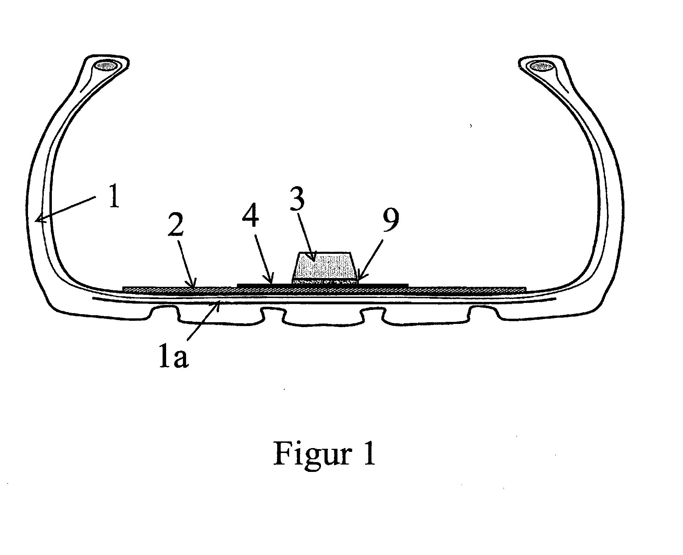

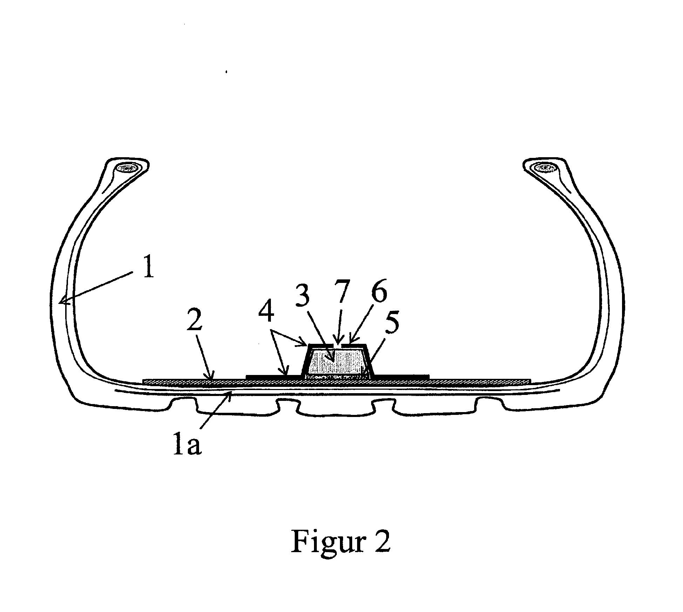

Unter Verwendung einer sog. Fixierfolie 4 ist die Sensoreinheit 3, deren Gehäuse beispielsweise die Gestalt eines Kreiskegelstumpfes aufweist und das bzw. die in den Figuren 1, 2 im wesentlichen maßstabsgerecht in Relation zum Reifen 1 dargestellt ist, bei den verschiedenen Ausführungsbeispielen auf unterschiedliche Weise an der Innenseite der Reifen-Lauffläche 1a befestigt, wobei stets diese Fixierfolie 4 auf die Innenseite der Reifen-Lauffläche 1a und zwar auf die dort vorgesehene Dichtmasse 2 aufgeklebt ist. Hierfür ist ein Klebstoff verwendet, der zur Herstellung einer Klebeverbindung mit der Dichtmasse 2 geeignet ist, beispielsweise ein zur Untergruppe der physikalisch abbindenden Klebstoffe gehörender Kompaktklebstoff. Idealerweise ist der Klebstoff solchermaßen ausgewählt, dass die Fixierfolie 4 nach erfolgter Verklebung mit der Dichtmasse 2 nicht mehr zerstörungsfrei von der Innenseite des Reifens 1 abgezogen werden kann. Da die Dichtmasse 2 die Klebewirkung an der Reifen-Innenseite beeinträchtigt, ist zur Erzielung einer ausreichenden Klebewirkung und somit zur Darstellung einer sicheren Klebeverbindung die Oberfläche der Fixierfolie 4 wesentlich größer gewählt ist als die Oberfläche der Sensoreinheit 3 bzw. einer Haltevorrichtung 6 für die Sensoreinheit 3, die derjenigen Reifen-Innenseite, an der die Sensoreinheit 3 befestigt ist, zugewandt ist. Konkret ist daher die Oberfläche der Fixierfolie 4 um ein Vielfaches in der Größenordnung von zumindest "10" bis "20" größer als die genannte Oberfläche der Sensoreinheit 3 oder der Haltevorrichtung 6 für die Sensoreinheit 3, da dann mit einem geeigneten Klebstoff, beispielsweise einem geeigneten Kontaktklebstoff, der eine ausreichend haltbare Klebeverbindung zwischen der Fixierfolie 4 und dem Reifen 1 erzielbar ist, die die Sensoreinheit 3 sicher an der Reifen-Innenseite hält.

Beim Ausführungsbeispiel nach **Figur 1** ist die Sensoreinheit 3 mit ihrer hierfür geeignet gestalteten der Lauffläche 1 a zugewandten Oberfläche auf die Fixierfolie 4 auf deren der Reifen-Innenseite abgewandten Seite aufgeklebt, wobei zum Schutz der Sensoreinheit 3 im Falle eines Reifen-Durchstichs im Bereich dieser Sensoreinheit 3 an deren der Reifen-Lauffläche 1a zugewandten Seite eine durchstoßhemmende oder gegenüber einem die Lauffläche 1 a durchstoßenden Fremdkörper gleitfähige Schicht 9 vorgesehen ist, so wie dies grundsätzlich aus der eingangs genannten DE 10 2009 006 707 A1 bekannt ist. Ausdrücklich ist eine solche Schicht 9 nur fakultativ vorgesehen.

Beim Ausführungsbeispiel nach **Figur 2** ist in die Fixierfolie 4 selbst eine Haltevorrichtung 6 für die Sensoreinheit 3 integriert bzw. es ist die Fixierfolie 4 an einer Stelle derart vorgeformt, dass die Fixierfolie 4 an dieser Stelle eine Haltevorrichtung 6 für die Sensoreinheit 3 bildet. Alternativ kann eine solche Haltevorrichtung 6 auf die Fixierfolie 4 aufgeklebt sein, was jedoch eher der Prinzipdarstellung nach **Figur 1** entspräche. In der vorliegenden **Figur 2** ist hingegen das Prinzip dargestellt, dass die Fixierfolie 4 die Sensoreinheit 3 überdeckt, so dass sich die Sensoreinheit 3 zwischen der Fixierfolie 4 und der Reifen-Innenseite bzw. der Innenseite der Reifen-Lauffläche 1 a befindet. Dabei ist in der Fixierfolie 4 ein Loch 7 oder dergleichen vorgesehen, welches einen Druckausgleich zwischen der Sensoreinheit 3 und dem Innenraum des Reifens 1 ermöglicht. Es kann die Sensoreinheit 3 zusätzlich mit ihrer hierfür geeignet gestalteten und der Lauffläche 1 a zugewandten Oberfläche auf der der Reifen-Innenseite aufgeklebt sein, alternativ kann die in die Fixierfolie 4 eingearbeitete Haltevorrichtung 6 zur Reifen-Innenwand hin wie hier dargestellt mit einer Verschlussfolie 5 abgeschlossen sein, so dass die Fixierfolie 4 mit darin angeordneter Sensoreinheit und Verschlussfolie 5 als Baueinheit zum Einsetzen in einen Reifen 1 angeliefert werden kann, jedoch ist dies nicht zwingend erforderlich. Vielmehr kann die Haltevorrichtung 6 in der Fixierfolie 4 auch derart gestaltet sein, dass die Sensoreinheit 3 bei auf die Reifen-Innenseite aufgeklebter Fixierfolie 4 von der Mitte des Reifens her in die Haltevorrichtung 6 eingesetzt werden kann. Die genannte (fakultative) Verschlussfolie 5 kann im übrigen eine durchstoßhemmende oder gegenüber einem die Lauffläche 1a durchstoßenden Fremdkörper gleitfähige Schicht aufweisen.

Beim diesem Ausführungsbeispiel nach Figur 2 kann vorzugsweise die Verschlussfolie 5 auf ihrer der Sensoreinheit 3 zugewandten Seite elektrisch leitfähig ausgebildet sein und dabei derart gestaltet sein, dass durch diese Verschlussfolie 5 im Anlieferungszustand dieser Baueinheit ein bestimmter elektrischer Kontakt an der Sensoreinheit 3 geschlossen ist. Wird die Sensoreinheit 3 später aus dieser im Reifen 1 verklebten Fixierfolie 4 ausgebaut, so wird dieser genannte elektrische Kontakt unterbrochen, wodurch in der Sensoreinheit 3 ein Signal vorliegt, aufgrund dessen in der Sensoreinheit 3 gespeicherte und diesem Reifen 1 zugeordnete Daten für eine Weiterverwendung gesperrt werden können. Damit ist es möglich, die in der Haltevorrichtung 6 gehaltene und aus dieser entfernbare Sensoreinheit 3 grundsätzlich in einem anderen Reifen wieder zu verwenden, wobei auf spezifische Daten aus der Vergangenheit, d.h. aus dem Einsatz im vorherigen Reifen resultierende und in der Sensoreinheit 3 gespeichert Daten nicht zugegriffen werden kann, so wie dies grundsätzlich in der DE 10 2007 060 861 beschrieben ist. Selbstverständlich kann der gleiche Effekt auch mit einem im Bereich der Haltevorrichtung 6 vorgesehenen elektrisch leitfähigen Abschnitt der Fixierfolie 4 erzielt werden.

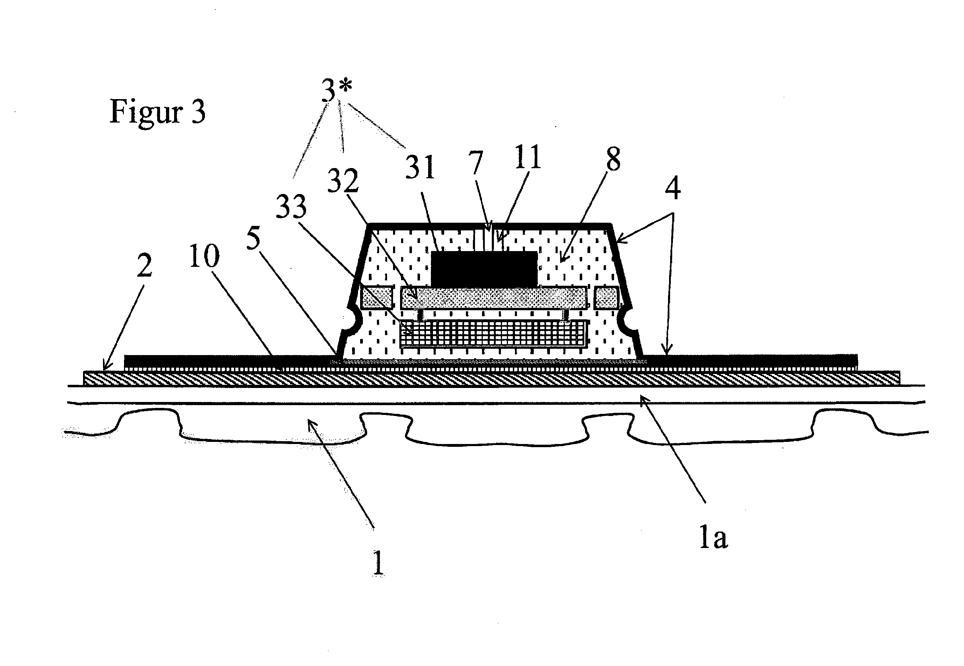

Beim Ausführungsbeispiel nach **Figur 3** weist die hier in ihrer Gesamtheit mit der Bezugsziffer 3* gekennzeichnete Sensoreinheit im Gegensatz zu den vorhergehenden Ausführungsbeispielen kein starres Gehäuse auf, in welchem die bereits genannten elektrisch/elektronischen Elemente vorgesehen sind, sondern hier sind diese einzelnen elektrisch/elektronischen Elemente als Sensoreinheit 3* ohne umgebendes Gehäuse in einem elektrisch nicht leitfähigen Gel 8 quasi schwimmend gelagert. Die Fixierfolie 4 stellt damit quasi das Gehäuse der Sensoreinheit 3* dar, was unter anderem eine Gewichtsreduzierung ermöglicht. Im Detail handelt es sich bei den einzelnen Elementen der Sensoreinheit 3* um einen den Drucksensor und ggf. einen Beschleunigungssensor enthaltenden integrierten Schaltkreis 31, der auf einer Platine 32 angeordnet ist, die von einer Batterie 33 oder dergleichen mit elektrischer Energie versorgt wird.

Wie ersichtlich ist das Gel 8 in einer "Ausbauchung" oder dgl. der Fixierfolie 4 gehalten, die sich von der Innenseite der Reifen-Lauffläche 1 a weg erstreckt. Sinnvollerweise ist diese das Gel 8 aufnehmende Ausbuchung rundum abgeschlossen oder abgedichtet, wofür vorliegend eine Verschlussfolie 5 vorgesehen ist, die im an der Reifen-Innenseite montierten Zustand der Fixierfolie 4 an der Innenseite der Reifen-Lauffläche 1a anliegt bzw. ebenso wie die Fixierfolie 4 abseits von deren Ausbuchung über eine in dieser Figur 3 figürlich dargestellten Schicht 10 von Klebstoff mit der Reifen-Innenseite verklebt ist, d.h. auf die bereits in Verbindung mit den Figuren 1, 2, erläuterte Dichtmasse 2 aufgeklebt ist. Ferner ist in der vorliegenden Prinzipskizze (Fig.3) zwischen der Oberfläche des Schaltkreises 31 und der Innenseite der Fixierfolie 4 bei einem Loch 7 in der Fixierfolie 4 ein ringförmiges Dichtelement 11 angeordnet, das den Austritt von Gel 8 über dieses Loch 7, über das der Drucksensor im Schaltkreis 31 dem Luftdruck im Reifen-Innenraum ausgesetzt ist, verhindert.

Vorteilhafterweise bildet die Fixierfolie 4 des Ausführungsbeispiels nach Figur 3 zusammen mit der Sensoreinheit 3*, d.h. zusammen mit den erläuterten und mit den Bezugsziffern 7-11 gekennzeichneten Komponenten ein zusammenhängendes vorgefertigtes Bauelement, das beispielsweise im Werk eines Fahrzeug-Herstellers oder in der Werkstatt eines Reifenhändlers nach Abziehen einer Schutzfolie in den Reifen 1 eingeklebt werden kann. Durch die Ausgestaltung in einer länglichen Form, nämlich indem die in Reifen-Umfangsrichtung gemessene Länge der Fixierfolie 4 größer als die Breite des Reifens 1 ist, kann die Sensoreinheit 3* vorteilhafterweise nur in einer für die Funktion und Lebensdauer des Drucksensors mit Schaltkreis 31 (und wie üblich integriertem Beschleunigungssensor) günstigen Ausrichtung in den Reifen 1 eingebracht werden.

Vorteilhafterweise kann bei der in Fig.3 gezeigten Anordnung der einzelnen Elemente der Sensoreinheit 3* im Gel 8 die Batterie 33 (oder eine an deren Stelle vorgesehene Vorrichtung zur Erzeugung von elektrischer Energie) die Funktion einer in den beiden anderen Ausführungsbeispielen vorgesehenen durchstoßhemmenden Schicht übernehmen. Im übrigen kann - was nicht separat figürlich dargestellt ist - auch die Fixierfolie 4 selbst zumindest im Bereich der Sensoreinheit 3 mit einem gegen einen Reifen-Durchstich widerstandsfähigem und/oder für einen durchstechenden Fremdkörper gleitfähigen Material versehen sein oder aus einem solchen Material bestehen.

## Patentansprüche

1. Fahrzeug-Luftreifen (1) mit einer Dichtmasse (2) auf der Reifen-Innenseite, die bei einer Beschädigung des Reifens (1) eine hieraus resultierende Undichtigkeit zumindest annähernd verschließt, sowie mit einem in einem mit Dichtmasse (2) versehenen Abschnitt des Reifens (1) vorgesehenen Warnsystem,
**dadurch gekennzeichnet, dass** das Warnsystem als an sich bekannte Sensoreinheit (3) zur Überwachung des Luftdrucks im Reifen (1) ausgebildet ist, die mittels einer Fixierfolie (4) an der mit der Dichtmasse (2) versehenen Reifen-Innenseite fixiert ist, wobei die Fixierfolie (4) großflächig auf die Reifen-Innenseite aufgeklebt ist und die Oberfläche der Fixierfolie (4) um ein Vielfaches größer ist als die Grundfläche der Sensoreinheit (3) oder einer Haltevorrichtung (6) für die Sensoreinheit (3).

2. Fahrzeug-Luftreifen nach Anspruch 1,
**dadurch gekennzeichnet, dass** die Fixierfolie (4) die Sensoreinheit (3) überdeckt, so dass sich die Sensoreinheit (3) zwischen der Fixierfolie (4) und der Reifen-Innenseite befindet.

3. Fahrzeug-Luftreifen nach Anspruch 1 oder 2,
**dadurch gekennzeichnet, dass** die Sensoreinheit (3) auf die Fixierfolie (4) aufgeklebt und/oder in einer an der Fixierfolie (4) vorgesehenen oder in diese eingeformten Haltevorrichtung (6) gehalten ist.

4. Fahrzeug-Luftreifen nach einem der vorangegangenen Ansprüche,
**dadurch gekennzeichnet, dass** die Oberfläche der Fixierfolie (4) zumindest um einen Faktor in der Größenordnung von 10 bis 20 größer ist als die der Reifen-Innenseite zugewandte Grundfläche der Sensoreinheit (3) oder deren Haltevorrichtung (6).

5. Fahrzeug-Luftreifen nach einem der vorangegangenen Ansprüche,
**dadurch gekennzeichnet, dass** die in Umfangsrichtung des Reifens gemessene Länge der Fixierfolie (4) größer ist als die Breite des Reifens.

6. Fahrzeug-Luftreifen nach einem der vorangegangenen Ansprüche,
**dadurch gekennzeichnet, dass** neben der Sensoreinheit (3) eine weitere der Überwachung des Reifens (1) dienende Einheit oder eine aus der Bewegung des Reifens Daten oder elektrische Energie gewinnende Einheit auf der Fixierfolie (4) vorgesehen oder durch die Fixierfolie (4) an der Reifen-Innenseite gehalten ist.

7. Fahrzeug-Luftreifen nach einem der vorangegangenen Ansprüche, **dadurch gekennzeichnet, dass** in oder auf der Fixierfolie (4) oder auf einer mit dieser im Bereich der Sensoreinheit (3) zusammenwirkenden und an der Sensoreinheit (3) anliegenden Verschlussfolie (5) eine elektrische Verbindung zwischen der Sensoreinheit (3) oder einer für diese vorgesehene elektrische Kontaktstelle und der weiteren Einheit oder einer anderen elektrischen Kontaktstelle vorgesehen ist.

8. Fahrzeug-Luftreifen nach einem der vorangegangenen Ansprüche, **dadurch gekennzeichnet, dass** die Fixierfolie (4) gestaltet ist, die in einem Gel (8) oder einer gelartigen Masse quasi schwimmend gelagerte Sensoreinheit (3) aufzunehmen.

9. Fahrzeug-Luftreifen nach einem der vorangegangenen Ansprüche, **dadurch gekennzeichnet, dass** die Fixierfolie (4) eine im wesentlichen diffusionsdichte Barriereschicht aufweist

10. Fahrzeug-Luftreifen nach einem der vorangegangenen Ansprüche, **dadurch gekennzeichnet, dass** die Fixierfolie (4) zumindest im Bereich der Sensoreinheit (3) mit einem gegen einen Reifen-Durchstich widerstandsfähigem und/oder für einen durchstechenden Fremdkörper gleitfähigen Material versehen ist oder aus einem solchen Material besteht.

## Claims

1. A vehicle pneumatic tyre (1) with a sealing compound (2) on the inside of the tyre, which sealing compound, when the tyre (1) is damaged, at least approximately closes a leak resulting therefrom, and with a warning system provided in a portion of the tyre (1) provided with sealing compound (2), **characterised in that** the warning system is configured as a sensor unit (3) known *per se* for monitoring the air pressure in the tyre, in which the said sensor unit is fixed by means of a fixing film (4) to the inside of the tyre provided with the sealing compound (2), the fixing film (4) is glued over a large surface area onto the inside of the tyre, and the surface of the fixing film (4) is several times larger than the base area of the sensor unit (3) or of a holding device (6) for the sensor unit (3).

2. A vehicle pneumatic tyre according to claim 1, **characterised in that** the fixing film (4) covers the sensor unit (3) so the sensor unit (3) is located between the fixing film (4) and the inside of the tyre.

3. A vehicle pneumatic tyre according to claim 1 or 2, **characterised in that** the sensor unit (3) is glued onto the fixing film (4) and/or is held in a holding device (6) provided on the fixing film (4) or formed into the latter.

4. A vehicle pneumatic tyre according to any one of the preceding claims, **characterised in that** the surface of the fixing film (4) is greater at least by a factor in the order of magnitude of 10 to 20 than the base area of the sensor unit (3) facing the inside of the tyre or of the holding device (6) for said sensor unit.

5. A vehicle pneumatic tyre according to any one of the preceding claims, **characterised in that** the length of the fixing film (4) measured in the peripheral direction of the tyre is greater than the width of the tyre.

6. A vehicle pneumatic tyre according to any one of the preceding claims, **characterised in that,** in addition to the sensor unit (3), a further unit, which is used to monitor the tyre (1), or a unit obtaining data or electrical energy from the movement of the tyre is provided on the fixing film (4) or held by the fixing film (4) on the inside of the tyre.

7. A vehicle pneumatic tyre according to any one of the preceding claims, **characterised in that** an electric connection is provided between the sensor unit (3) or an electric contact point provided for this and the further unit or another electric contact point in or on the fixing film (4) or on a closing film (5) cooperating therewith in the region of the sensor unit (3) and resting on the sensor unit (3).

8. A vehicle pneumatic tyre according to any one of the preceding claims, **characterised in that** the fixing film (4) is designed to accommodate the sensor unit (3), which is mounted in a virtually floating manner in a gel (8) or in a gel-like compound.

9. A vehicle pneumatic tyre according to any one of the preceding claims, **characterised in that** the fixing film (4) has a substantially diffusion-tight barrier layer.

10. A vehicle pneumatic tyre according to any one of the preceding claims, **characterised in that** the fixing film (4), at least in the region of the sensor unit (3), is provided with a material, which is resistant to a puncturing of the tyre and/or is slippery for a puncturing foreign body, or comprises a material of this type.

## Revendications

1. Pneumatique de véhicule (1) comportant un matériau d'étanchéité (2) appliqué sur le côté intérieur du pneumatique et qui, en cas de dommage au pneumatique (1) ferme au moins pratiquement le défaut d'étanchéité ainsi provoqué et un système avertisseur dans le segment du pneumatique (1) muni du matériau d'étanchéité (2),
pneumatique **caractérisé en ce que**
le système avertisseur se compose d'une unité de capteur (3) connue en soi, pour surveiller la pression de l'air dans le pneumatique (1) et qui est fixée à l'aide d'un film de fixation (4) sur le côté intérieur du pneumatique muni du matériau d'étanchéité (2),
le film de fixation (4) étant collé suivant une grande surface sur le côté intérieur du pneumatique, et
la surface du film de fixation (4) est plusieurs fois plus grande que la surface de base de l'unité de capteurs (3) ou d'un dispositif de maintien (6) de l'unité de capteurs (3).

2. Pneumatique de véhicule selon la revendication 1,
**caractérisé en ce que**
le film de fixation (4) couvre l'unité de capteur (3) pour que l'unité de capteur (3) se trouve entre le film de fixation (4) et le côté intérieur du pneumatique.

3. Pneumatique de véhicule selon la revendication 1 ou 2,
**caractérisé en ce que**
l'unité de capteur (3) est collée sur le film de fixation (4) et/ou est tenue dans un dispositif de maintien (6) prévue sur le film de fixation (4) ou formée dans celui-ci.

4. Pneumatique de véhicule selon l'une des revendications précédentes, **caractérisé en ce que**
la surface du film de fixation (4) est plus grande d'un coefficient de l'ordre de 10 à 20 que la surface de base de l'unité de capteur (3) ou de celle de son dispositif de maintien (6) tournée vers le côté intérieur du pneumatique.

5. Pneumatique de véhicule selon l'une quelconque des revendications précédentes,
**caractérisé en ce que**
la longueur du film de fixation (4) mesurée dans la direction périphérique du pneumatique est plus grande que la largeur du pneumatique.

6. Pneumatique de véhicule selon l'une quelconque des revendications précédentes,
**caractérisé en ce qu'**
à côté de l'unité de capteur (3) il comporte une autre unité servant à surveiller le pneumatique (1) ou une unité fournissant des données relatives au mouvement du pneumatique ou fournissant de l'énergie électrique, cette unité étant prévue sur le film de fixation (4) ou étant tenue contre le côté intérieur du pneumatique par le film de fixation (4).

7. Pneumatique de véhicule selon l'une quelconque des revendications précédentes,
**caractérisé par**
une liaison électrique entre l'unité de capteur (3) et un point de contact électrique prévu pour celle-ci et l'autre unité ou un autre point de contact électrique dans ou sur le film de fixation (4) ou sur un film de fermeture (5) coopérant avec celui-ci dans la région de l'unité de capteurs (3) ou s'appliquant sur l'unité de capteur (3).

8. Pneumatique de véhicule selon l'une quelconque des revendications précédentes,
**caractérisé en ce que**
le film de fixation (4) est formé pour recevoir l'unité de capteur (3) logée de manière quasi-flottante dans un gel (8) ou dans une masse en forme de gel.

9. Pneumatique de véhicule selon l'une quelconque des revendications précédentes,
**caractérisé en ce que**
le film de fixation (4) comporte une couche-barrière pratiquement étanche à la diffusion.

10. Pneumatique de véhicule selon l'une quelconque des revendications précédentes,
**caractérisé en ce qu'**
au moins dans la région de l'unité de capteur (3), le film de fixation (4) est muni d'un matériau résistant à la perforation du pneumatique et/ou glissant pour le corps étranger qui perce ou est réalisé en un tel matériau.
